# EUROPEAN PATENT SPECIFICATION

(11) **EP 4 385 899 B1**
(45) Date of publication and mention of the grant of the patent: **28.10.2026**
(21) Application number: 23216430.1
(22) Date of filing: 13.12.2023
(51) Int. Cl.: B64D 15/04, B64D 15/06, B64D 33/02

(54) **AIRCRAFT THERMAL ANTI-ICING SYSTEM**
THERMISCHES ENTEISUNGSSYSTEM FÜR FLUGZEUGE
SYSTÈME D'ANTIGIVRAGE THERMIQUE D'AÉRONEF

(30) Priority: 13.12.2022 US 202218080514
(43) Date of publication of application: 19.06.2024
(73) Proprietor: PRATT & WHITNEY CANADA CORP., Longueuil, Québec J4G 1A1 (CA)
(72) Inventor: BELLEVILLE, Francois, (01BE5) Longueuil, J4G 1A1 (CA)
(74) Representative: Dehns

(56) References cited:
- EP-B1- 1 479 889
- GB-A- 506 179
- US-A1- 2014 369 812
- US-A1- 2015 291 284

## Description

### TECHNICAL FIELD

This disclosure relates generally to an aircraft and, more particularly, to a thermal anti-icing system for the aircraft.

### BACKGROUND INFORMATION

An aircraft may include a thermal anti-icing system for melting and/or preventing accumulation of ice on an exterior (e.g., leading edge) surface of the aircraft. Various types and configurations of thermal anti-icing systems are known in the art. While these known thermal anti-icing systems have various benefits, there is still room in the art for improvement.

GB 506179 A discloses a prior art aircraft system according to the preamble of claim 1. US 2015/291284 A1 relates to a de-icing system with thermal management. EP 1479889 B1 relates to a gas turbine engine and an intake for a gas turbine engine with a device to prevent ice forming. US 2014/369812 A1 relates to a turbine engine nacelle fitted with a heat exchanger.

### SUMMARY

According to an aspect of the present disclosure, an aircraft system is provided according to claim 1.

The following optional features may be applied to the above aspect:
The aircraft system may also include a louver arranged at the inlet and configured to direct the heated air from the air duct into the inlet.

The aircraft system may also include: means for directing the heated air from the air duct into the inlet.

The air duct may be outside of the powerplant.

The aircraft structure may be an aircraft wing. The exterior surface may form a leading edge of the aircraft wing.

The bleed air may be exhausted from the aircraft wing at a tip of the aircraft wing.

The bleed air may be exhausted from the aircraft wing at a trailing edge of the aircraft wing.

The aircraft structure may be an aircraft wing. The anti-icing system may be configured to direct the bleed air along a leading edge of the aircraft wing to heat the exterior surface.

The aircraft structure may include a nacelle housing the powerplant. An inlet nose lip of the nacelle may include the exterior surface.

The aircraft structure may include a nacelle housing the powerplant. The anti-icing system may be configured to direct the bleed air along an inlet nose lip of the nacelle to heat the exterior surface.

The cooling circuit may flow lubricant for the powerplant.

The cooling circuit may flow fuel for the powerplant.

The cooling circuit may flow a cooling fluid for the powerplant.

The powerplant may be configured as or otherwise include a thermal engine.

The powerplant may be configured as or otherwise include an electric motor.

The present disclosure may include any one or more of the individual features disclosed above and/or below alone or in any combination thereof, as far as they fall within the scope of the appended claims.

The foregoing features and the operation of the invention will become more apparent in light of the following description and the accompanying drawings.

### BRIEF DESCRIPTION OF THE DRAWINGS

FIG. 1 is a partial side schematic illustration of an aircraft system.
FIG. 2 is a partial top view schematic illustration of the aircraft system.
FIG. 3 is a side schematic illustration of a gas turbine engine and an exhaust duct.

### DETAILED DESCRIPTION

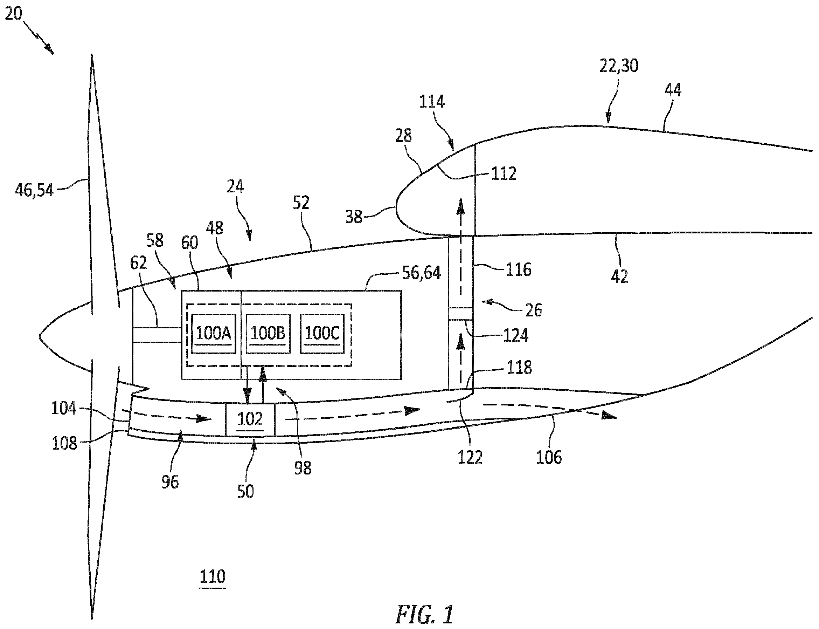

FIG. 1 illustrates a system 20 for an aircraft such as an airplane. The aircraft system 20 includes an airframe structure 22 and an aircraft propulsion system 24 mounted to the airframe structure 22. The aircraft system 20 also includes a thermal anti-icing system 26 configured to melt and/or prevent ice accumulation on an exterior surface 28 of the airframe structure 22.

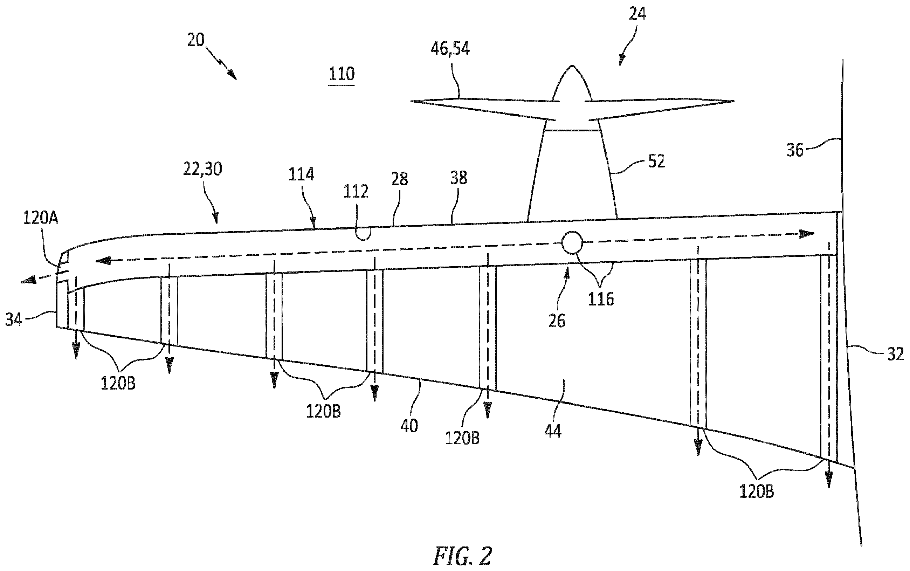

The airframe structure 22 may be configured as or otherwise include a wing 30 of the aircraft. Referring to FIG. 2, the aircraft wing 30 extends spanwise along a span line from a base 32 of the aircraft wing 30 to a tip 34 of the aircraft wing 30. This aircraft wing 30 of FIG. 2 is connected to a fuselage 36 of the aircraft at its wing base 32. The aircraft wing 30 extends longitudinally (e.g., along a camber line) from a leading edge 38 of the aircraft wing 30 to a trailing edge 40 of the aircraft wing 30. Referring to FIG. 1, the aircraft wing 30 has a thickness that extends vertically between and to a bottom side 42 of the aircraft wing 30 and a top side 44 of the aircraft wing 30. Referring to FIGS. 1 and 2, each wing side 42, 44 extends spanwise from the wing base 32 to the wing tip 34. Each wing side 42, 44 extends longitudinally between the leading edge 38 and the trailing edge 40, where the wing sides 42 and 44 may meet at the leading edge 38 and the trailing edge 40.

Referring to FIG. 1, the aircraft propulsion system 24 includes a propulsor rotor 46, a powerplant 48 and a powerplant cooling system 50. The aircraft propulsion system 24 also includes a nacelle 52 housing and providing an aerodynamic cover over the powerplant 48 and the cooling system 50. The nacelle 52 of FIG. 1 may also house and provide an aerodynamic cover over at least a portion of the anti-icing system 26.

The propulsor rotor 46 may be configured as or otherwise include a bladed rotor. This propulsor rotor 46 may be an open rotor (e.g., an un-ducted rotor) such as a propeller rotor 54 for a propeller propulsion system; e.g., a turboprop engine. Other examples of the open rotor include a propulsor rotor for a propfan propulsion system or a propulsor rotor for a pusher fan propulsion system. The present disclosure, however, is not limited to open rotor propulsion systems. The propulsor rotor 46, for example, may alternative be a ducted rotor such as a fan rotor (e.g., a fan) for a turbofan propulsion system; e.g., a turbofan engine. It is further contemplated the propulsor rotor 46 may be configured as another type of air mover. However, for ease of description, the propulsor rotor 46 may be described below as the propeller rotor 54.

The powerplant 48 is configured to drive rotation of the propulsor rotor 46. The powerplant 48 of FIG. 1, for example, includes a drive unit 56 and a drivetrain 58 operatively connecting the drive unit 56 to the propulsor rotor 46. This drivetrain 58 may be configured as a geared drivetrain. The drivetrain 58 of FIG. 1, for example, includes a geartrain 60 (e.g., a reduction gear system) and a shaft 62 or another power transmission device coupling an output of the geartrain 60 to the propulsor rotor 46. The present disclosure, however, is not limited to such an exemplary arrangement. Furthermore, in other embodiments, the geartrain 60 may be omitted from the drivetrain 58 to provide a direct drive coupling between the drive unit 56 and the propulsor rotor 46.

The drive unit 56 may be configured as or otherwise include a thermal engine. Examples of the thermal engine include, but are not limited to, a gas turbine engine 64, a reciprocating piston engine and a rotary engine. The drive unit 56 may alternatively be configured as or also include an electric motor and/or a fuel cell. The present disclosure, however, is not limited to the foregoing exemplary drive unit configurations. The drive unit 56, for example, may be configured as or otherwise include any apparatus capable of driving rotation of the propulsor rotor 46 as well as generating heat energy during its operation. However, for ease of description, the drive unit 56 may be described below as the gas turbine engine 64.

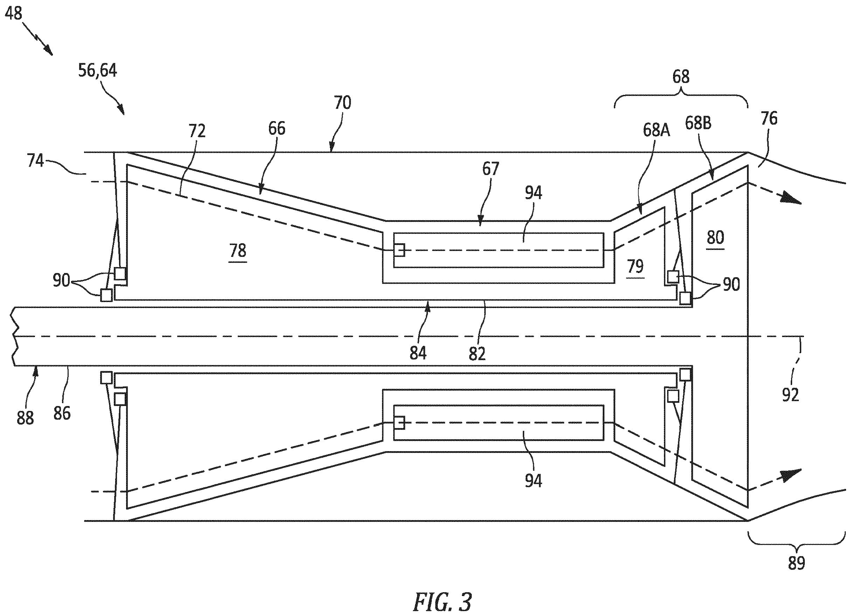

Referring to FIG. 3, the gas turbine engine 64 includes a compressor section 66, a combustor section 67 and a turbine section 68. The turbine section 68 may include a high pressure turbine (HPT) section 68A and a low pressure turbine (LPT) section 68B; e.g., a power turbine section. The gas turbine engine 64 also includes an engine case 70 housing the engine sections 66-68B.

The compressor section 66, the combustor section 67, the HPT section 68A and the LPT section 68B are arranged sequentially along a core flowpath 72 within the gas turbine engine 64. This core flowpath 72 extends within the gas turbine engine 64 from an upstream airflow inlet 74 into the gas turbine engine 64 to a downstream combustion products exhaust 76 from the gas turbine engine 64.

Each of the engine sections 66, 68A and 68B includes a respective bladed rotor 78-80. Each of these bladed rotors 78-80 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The compressor rotor 78 is connected to the HPT rotor 79 through a high speed shaft 82. At least the compressor rotor 78, the HPT rotor 79 and the high speed shaft 82 may collectively form a high speed rotating structure 84 of the gas turbine engine 64. The LPT rotor 80 is connected to a low speed shaft 86, which low speed shaft 86 may extend axially through a bore of the high speed rotating structure 84 and its high speed shaft 82. At least the LPT rotor 80 and the low speed shaft 86 may collectively form a low speed rotating structure 88 of the gas turbine engine 64. This low speed rotating structure 88 may be coupled to and rotatable with the propulsor rotor 46 of FIG. 1 through the drivetrain 58 and its members(s) 60 and/or 62. The present disclosure, however, is not limited to such a geared coupling between the powerplant 48 and the propulsor rotor 46. The powerplant 48, for example, may alternatively be operatively connected to the propulsor rotor 46 without a geartrain; e.g., via a direct drive drivetrain.

The rotating structures 84 and 88 and their shafts 82 and 86 of FIG. 3 are supported by a plurality of bearings 90. Each of these bearings 90 is connected to the engine case 70 by one or more support structures; e.g., struts, frames, etc. With this arrangement, each of the rotating structures 84, 88 of FIG. 3 is rotatable about an axial centerline 92 (e.g., a rotational axis) of the gas turbine engine 64.

During gas turbine engine operation, air enters the core flowpath 72 through the airflow inlet 74 and is directed into the compressor section 66. The air within the core flowpath 72 may be referred to as "core air". This core air is compressed by the compressor rotor 78 and directed into a combustion chamber 94 of a combustor within the combustor section 67. The fuel is injected into the combustion chamber 94 by one or more fuel injectors and mixed with the compressed air to provide a fuel-air mixture. This fuel-air mixture is ignited and combustion products thereof flow through and sequentially cause the HPT rotor 79 and the LPT rotor 80 to rotate. The rotation of the HPT rotor 79 drives rotation of the compressor rotor 78 and, thus, compression of the air received from the airflow inlet 74. The rotation of the LPT rotor 80 and, more generally, the low speed rotating structure 88 provides mechanical power for driving (e.g., rotating) the propulsor rotor 46 of FIG. 1. The combustion products may then be exhausted from the aircraft propulsion system 24 through an exhaust duct 89. The present disclosure, however, is not limited to such an exemplary gas turbine engine configuration. For example, in other embodiments, the low speed rotating structure 88 may also include a compressor rotor. In still other embodiments, the low speed rotating structure 88 may be omitted and the high speed rotating structure 84 may be configured for providing the mechanical power for driving the propulsor rotor 46 of FIG. 1.

The powerplant 48 generates heat energy during its operation. This heat energy may be generated by frictional contact between internal components of the geartrain 60 of FIG. 1; e.g., gears, bearings, shafts, etc. Referring to FIG. 3, the heat energy may be generated by frictional contact between components of one or more of the bearings 90. The heat energy may be generated by compression of the core air within the compressor section 66. The heat energy may be generated by combustion of the fuel-air mixture within the combustion chamber 94. The heat energy may also or alternatively be generated by and/or within various other components, structures and/or sections of the powerplant 48 and its members 56 and/or 58.

The cooling system 50 of FIG. 1 is configured to extract at least some of the heat energy from the powerplant 48 and one or more of its members 56 and/or 58 to cool the powerplant 48 and its member(s) 56 and/or 58 using a working fluid. Briefly, this working fluid may be any fluid (e.g., liquid and/or gas) used within the powerplant 48. The working fluid, for example, may be lubricant, coolant and/or fuel. The cooling system 50 includes an air duct 96 and a cooling circuit 98. The cooling circuit 98 of FIG. 1 includes one or more powerplant heat exchangers 100A-C (generally referred to as "100"), a duct heat exchanger 102 and the working fluid.

The air duct 96 may be disposed outside of the powerplant 48. The air duct 96 of FIG. 1, for example, is disposed vertically below the powerplant 48 and its drive unit 56; e.g., the gas turbine engine 64. The air duct 96 extends within the nacelle 52 between and to an airflow inlet 104 into the air duct 96 and an airflow exhaust 106 from the air duct 96. The airflow inlet 104 may be formed by an inlet nose lip 108 of the nacelle 52. This nose lip 108 is configured to direct ambient air from an environment 110 external to the aircraft propulsion system 24 into the air duct 96. The airflow exhaust 106, on the other hand, is configured to exhaust air from within the air duct 96 out of the aircraft propulsion system 24 into the external environment 110. The air duct 96 may be configured as a bypass duct such that the air flowing within the air duct 96 bypasses (e.g., does not enter, is not received from, etc.) the powerplant 48 and its drive unit 56; e.g., the core flowpath 72 within the gas turbine engine 64 of FIG. 3. It is contemplated, however, that some of the air within the air duct 96 may alternatively be split off and directed to the powerplant 48 and its drive unit 56 (e.g., into the airflow inlet 74 of the gas turbine engine 64 of FIG. 3) in other embodiments.

Each powerplant heat exchanger 100 is arranged with the powerplant 48. At least one of the powerplant heat exchangers (e.g., 100A), for example, may be arranged with the drivetrain 58; e.g., the geartrain 60. One or more of the powerplant heat exchangers (e.g., 100B and 100C) may also or alternatively be arranged with the drive unit 56; e.g., the gas turbine engine 64. Each powerplant heat exchanger 100 is configured to transfer heat energy out of a respective powerplant component (or components) generating the heat energy and/or otherwise exposed to the heat energy. Each powerplant heat exchanger 100, for example, may be thermally coupled to the respective component(s) or integrated as part of the respective component(s). Each powerplant heat exchanger 100 may thereby transfer the heat energy out of the respective powerplant component (or components) and into the working fluid.

The duct heat exchanger 102 is arranged with the air duct 96. The duct heat exchanger 102 of FIG. 1, for example, is disposed within the air duct 96. The duct heat exchanger 102, in particular, may extend laterally across an internal flowpath of the air duct 96. The duct heat exchanger 102 is configured to transfer the thermal energy, added to the working fluid by the powerplant heat exchangers 100, into air flowing within the air duct 96 through and/or around the duct heat exchanger 102. The cooling circuit 98 may thereby cool the respective powerplant component (or components) using the powerplant heat exchangers 100, and heat the air flowing within the air duct 96 using the duct heat exchanger 102 to provide heated air.

The anti-icing system 26 is configured to utilize heat energy extracted (e.g., rejected) from the powerplant 48 during the powerplant cooling for heating the exterior surface 28. More particularly, the anti-icing system 26 is configured to bleed some of the heated air from the air duct 96 and direct that heated air into the airframe structure 22 (e.g., the aircraft wing 30) for heating a backside 112 (e.g., an interior) of a skin 114 forming the exterior surface 28. The anti-icing system 26 of FIG. 1, for example, includes an anti-icing duct 116. This anti-icing duct 116 includes a bleed inlet 118 along the air duct 96 (e.g., in a sidewall of the air duct 96) between the duct heat exchanger 102 and the airflow exhaust 106. The anti-icing duct 116 extends from its bleed inlet 118 within the nacelle 52 and into the aircraft wing 30 (e.g., the airframe structure 22). Referring to FIG. 2, within the aircraft wing 30, the anti-icing duct 116 is disposed at and may extend spanwise along at least a portion or an entirety of the leading edge 38. With this arrangement, the heated air may heat the wing skin 114 at the leading edge 38 and thereby melt and/or prevent ice accumulation along the leading edge 38.

After the heated air is directed past an area of interest (e.g., the leading edge 38), the now cooler air may be exhausted from the anti-icing system 26 through one or more outlets 120A and 120B (generally referred to as "120"). At least one of the outlets (e.g., 120A, 120B) may be disposed at the wing tip 34. At least one of the outlets (e.g., 120B) may be disposed at the wing base 32. One or more of the outlets (e.g., 120B) may also or alternatively be disposed at and along the trailing edge 40.

In some embodiments, referring to FIG. 1, the anti-icing system 26 may include a louver 122 to facilitate bleeding of the heated air from the air duct 96. The louver 122 of FIG. 1, for example, is arranged at the bleed inlet 118 and configured to direct the heated air into the anti-icing duct 116 through the bleed inlet 118. This louver 122 may be a stationary element. Alternatively, the louver 122 may be moveable (e.g., pivotable) to regulate bleeding of the heated air from the air duct 96 into the anti-icing duct 116.

Referring to FIG. 1, the anti-icing system 26 includes a fan 124 to propel the heated bleed air into the airframe structure 22; e.g., the aircraft wing 30. The fan 124, for example, may be located within the anti-icing duct 116, downstream of the bleed inlet 118. This fan 124 may be (e.g., directly or indirectly) rotationally driven by an electric motor, a hydraulic motor or otherwise. The fan 124 may be operated (e.g., switched on) when, for example, a forward speed of the aircraft through the external environment 110 does not generate enough air pressure within the air duct 96 to propel the air bled from the air duct 96 through the anti-icing duct 116 and into the airframe structure 22. By contrast, when the forward speed of the aircraft through the external environment 110 does generate enough air pressure within the air duct 96 to propel the air bled from the air duct 96 through the anti-icing duct 116 and into the airframe structure 22, the fan 124 may be switched off; e.g., the fan 124 may not rotate / may be non-operational. Of course, it is contemplated the fan 124 may also or alternatively be used during other modes of operation; e.g., to boost air pressure.

The anti-icing system 26 is described above as delivering the heated air to a structure outside of / discrete from the nacelle 52 housing the powerplant 48. However, in other embodiments, the anti-icing system 26 may also or alternatively deliver the heated air to a portion of the nacelle 52. The anti-icing system 26, for example, may also or alternatively direct the heated air to an inlet nose lip that directs air to the drive unit 56 and its airflow inlet 74 (see FIG. 3) and/or the inlet nose lip 108. In still other embodiments, the anti-icing system 26 may also or alternatively deliver the heated air to any other structure of the aircraft which would benefit from melting and/or preventing ice accumulation thereon. The aircraft structure(s) may be remote from the powerplant 48 (e.g., discrete from the nacelle 52) and/or part of the nacelle 52.

While various embodiments of the present disclosure have been described, it will be apparent to those of ordinary skill in the art that many more embodiments and implementations are possible within the scope of the appended claims.

## Claims

1. An aircraft system (20), comprising:
a propulsor rotor (46);
a powerplant (48) operatively and rotatably coupled to the propulsor rotor (46);
a cooling system (50) including a cooling circuit (98) and an air duct (96), the cooling circuit (98) thermally coupled with the powerplant (48) to extract heat energy from the powerplant (48), and the cooling circuit (98) thermally coupled with air flowing within the air duct (96) to transfer the heat energy into the air and provide heated air;
an anti-icing system (26) including an inlet (118) fluidly coupled with the air duct (96), the anti-icing system (26) adapted to bleed some of the heated air from the air duct (96) through the inlet (118) to provide bleed air; and
an aircraft structure (22) comprising an exterior surface (28), the anti-icing system (26) adapted to direct the bleed air into the aircraft structure (22) to heat the exterior surface (28);
**characterised in that**:
the aircraft system (20) further comprises a fan (124) downstream of the inlet (118) and configured to propel the bleed air into the aircraft structure (22).

2. The aircraft system (20) of claim 1, further comprising a louver (122) arranged at the inlet (118) and configured to direct the heated air from the air duct (96) into the inlet (118).

3. The aircraft system (20) of claim 1, further comprising:
means for directing the heated air from the air duct (96) into the inlet (118).

4. The aircraft system (20) of any preceding claim, wherein the air duct (96) is outside of the powerplant (48).

5. The aircraft system (20) of any preceding claim, wherein:
the aircraft structure (22) is an aircraft wing (30); and
the exterior surface (28) forms a leading edge (38) of the aircraft wing (30).

6. The aircraft system (20) of claim 5, wherein:
the bleed air is exhausted from the aircraft wing (30) at a tip (34) of the aircraft wing (30).

7. The aircraft system (20) of claim 5, wherein:
the bleed air is exhausted from the aircraft wing (30) at a trailing edge (40) of the aircraft wing (30).

8. The aircraft system (20) of any preceding claim, wherein:
the aircraft structure (22) is an aircraft wing (30); and
the anti-icing system (26) is configured to direct the bleed air along a leading edge (38) of the aircraft wing (30) to heat the exterior surface (28).

9. The aircraft system (20) of any preceding claim, wherein:
the aircraft structure (22) comprises a nacelle (52) housing the powerplant (48); and
an inlet nose lip (108) of the nacelle (52) includes the exterior surface (28).

10. The aircraft system (20) of any preceding claim, wherein:
the aircraft structure (22) comprises a nacelle (52) housing the powerplant (48); and
the anti-icing system (26) is configured to direct the bleed air along an inlet nose lip (108) of the nacelle (52) to heat the exterior surface (28).

11. The aircraft system (20) of any preceding claim, wherein:
the cooling circuit (98) flows lubricant for the powerplant (48).

12. The aircraft system (20) of any of claims 1 to 10, wherein:
the cooling circuit (98) flows fuel for the powerplant (48).

13. The aircraft system (20) of any of claims 1 to 10, wherein:
the cooling circuit (98) flows a cooling fluid for the powerplant (48).

14. The aircraft system (20) of any preceding claim, wherein:
the powerplant (48) comprises a thermal engine.

15. The aircraft system (20) of any of claims 1 to 13, wherein:
the powerplant (48) comprises an electric motor.

## Patentansprüche

1. Luftfahrzeugsystem (20), umfassend:
einen Antriebsrotor (46);
ein Triebwerk (48), das wirksam und drehbar an den Antriebsrotor (46) gekoppelt ist;
ein Kühlsystem (50) einschließlich eines Kühlkreislaufs (98) und eines Luftkanals (96), wobei der Kühlkreislauf (98) thermisch mit dem Triebwerk (48) gekoppelt ist, um Wärmeenergie aus dem Triebwerk (48) zu extrahieren, und der Kühlkreislauf (98) thermisch mit Luft gekoppelt ist, die innerhalb des Luftkanals (96) strömt, um die Wärmeenergie in die Luft zu übertragen und erhitzte Luft bereitzustellen;
ein Enteisungssystem (26) einschließlich eines Einlasses (118), der fluidtechnisch mit dem Luftkanal (96) gekoppelt ist, wobei das Enteisungssystem (26) angepasst ist, um einen Teil der erhitzten Luft aus dem Luftkanal (96) durch den Einlass (118) abzuzapfen, um Zapfluft bereitzustellen; und
eine Luftfahrzeugstruktur (22), die eine Außenfläche (28) umfasst, wobei das Enteisungssystem (26) angepasst ist, um die Zapfluft in die Luftfahrzeugstruktur (22) zu leiten, um die Außenfläche (28) zu erhitzen;
**dadurch gekennzeichnet, dass**:
das Luftfahrzeugsystem (20) ferner ein Gebläse (124) stromabwärts des Einlasses (118) umfasst, das konfiguriert ist, um die Zapfluft in die Luftfahrzeugstruktur (22) zu treiben.

2. Luftfahrzeugsystem (20) nach Anspruch 1, ferner umfassend eine Jalousie (122), die an dem Einlass (118) angeordnet und konfiguriert ist, um die erhitzte Luft aus dem Luftkanal (96) in den Einlass (118) zu leiten.

3. Luftfahrzeugsystem (20) nach Anspruch 1, ferner umfassend:
Mittel, um die erhitzte Luft aus dem Luftkanal (96) in den Einlass (118) zu leiten.

4. Luftfahrzeugsystem (20) nach einem der vorhergehenden Ansprüche, wobei sich der Luftkanal (96) außerhalb des Triebwerks (48) befindet.

5. Luftfahrzeugsystem (20) nach einem der vorhergehenden Ansprüche, wobei:
die Luftfahrzeugstruktur (22) ein Luftfahrzeugflügel (30) ist; und
die Außenfläche (28) eine Vorderkante (38) des Luftfahrzeugflügels (30) bildet.

6. Luftfahrzeugsystem (20) nach Anspruch 5, wobei:
die Zapfluft aus dem Luftfahrzeugflügel (30) an einer Spitze (34) des Luftfahrzeugflügels (30) ausgestoßen wird.

7. Luftfahrzeugsystem (20) nach Anspruch 5, wobei:
die Zapfluft aus dem Luftfahrzeugflügel (30) an einer Hinterkante (40) des Luftfahrzeugflügels (30) ausgestoßen wird.

8. Luftfahrzeugsystem (20) nach einem der vorhergehenden Ansprüche, wobei:
die Luftfahrzeugstruktur (22) ein Luftfahrzeugflügel (30) ist; und
das Enteisungssystem (26) konfiguriert ist, um die Zapfluft entlang einer Vorderkante (38) des Luftfahrzeugflügels (30) zu leiten, um die Außenfläche (28) zu erhitzen.

9. Luftfahrzeugsystem (20) nach einem der vorhergehenden Ansprüche, wobei:
die Luftfahrzeugstruktur (22) eine Gondel (52) umfasst, die das Triebwerk (48) einhaust; und
eine Einlassnasenlippe (108) der Gondel (52) die Außenfläche (28) einschließt.

10. Luftfahrzeugsystem (20) nach einem der vorhergehenden Ansprüche, wobei:
die Luftfahrzeugstruktur (22) eine Gondel (52) umfasst, die das Triebwerk (48) einhaust; und
das Enteisungssystem (26) konfiguriert ist, um die Zapfluft entlang einer Einlassnasenlippe (108) der Gondel (52) zu leiten, um die Außenfläche (28) zu erhitzen.

11. Luftfahrzeugsystem (20) nach einem der vorhergehenden Ansprüche, wobei:
der Kühlkreislauf (98) Schmiermittel für das Triebwerk (48) strömen lässt.

12. Luftfahrzeugsystem (20) nach einem der Ansprüche 1 bis 10, wobei:
der Kühlkreislauf (98) Kraftstoff für das Triebwerk (48) strömen lässt.

13. Luftfahrzeugsystem (20) nach einem der Ansprüche 1 bis 10, wobei:
der Kühlkreislauf (98) ein Kühlfluid für das Triebwerk (48) strömen lässt.

14. Luftfahrzeugsystem (20) nach einem der vorhergehenden Ansprüche, wobei:
das Triebwerk (48) eine Wärmekraftmaschine umfasst.

15. Luftfahrzeugsystem (20) nach einem der Ansprüche 1 bis 13, wobei:
das Triebwerk (48) einen Elektromotor umfasst.

## Revendications

1. Système d'aéronef (20), comprenant :
un rotor de propulseur (46) ;
un groupe motopropulseur (48) couplé de manière fonctionnelle et rotative au rotor de propulseur (46) ;
un système de refroidissement (50) comportant un circuit de refroidissement (98) et un conduit d'air (96), le circuit de refroidissement (98) étant thermiquement couplé au groupe motopropulseur (48) pour extraire de l'énergie thermique du groupe motopropulseur (48), et le circuit de refroidissement (98) étant thermiquement couplé à l'air circulant au sein du conduit d'air (96) pour transférer l'énergie thermique dans l'air et fournir de l'air chauffé ;
un système antigivrage (26) comportant une entrée (118) couplée fluidiquement au conduit d'air (96), le système antigivrage (26) étant adapté pour prélever une certaine partie de l'air chauffé du conduit d'air (96) à travers l'entrée (118) pour fournir de l'air de prélèvement ; et
une structure d'aéronef (22) comprenant une surface extérieure (28), le système antigivrage (26) étant adapté pour diriger l'air de prélèvement dans la structure d'aéronef (22) pour chauffer la surface extérieure (28) ;
**caractérisé en ce que** :
le système d'aéronef (20) comprend en outre un ventilateur (124) en aval de l'entrée (118) et configuré pour propulser l'air de prélèvement dans la structure d'aéronef (22).

2. Système d'aéronef (20) selon la revendication 1, comprenant en outre un volet (122) agencé au niveau de l'entrée (118) et configuré pour diriger l'air chauffé du conduit d'air (96) dans l'entrée (118).

3. Système d'aéronef (20) selon la revendication 1, comprenant en outre :
un moyen pour diriger l'air chauffé du conduit d'air (96) dans l'entrée (118).

4. Système d'aéronef (20) selon une quelconque revendication précédente, dans lequel le conduit d'air (96) est à l'extérieur du groupe motopropulseur (48).

5. Système d'aéronef (20) selon une quelconque revendication précédente, dans lequel :
la structure d'aéronef (22) est une aile d'aéronef (30) ; et
la surface extérieure (28) forme un bord d'attaque (38) de l'aile d'aéronef (30).

6. Système d'aéronef (20) selon la revendication 5, dans lequel :
l'air de prélèvement est évacué de l'aile d'aéronef (30) au niveau d'une pointe (34) de l'aile d'aéronef (30).

7. Système d'aéronef (20) selon la revendication 5, dans lequel :
l'air de prélèvement est évacué de l'aile d'aéronef (30) au niveau d'un bord de fuite (40) de l'aile d'aéronef (30).

8. Système d'aéronef (20) selon une quelconque revendication précédente, dans lequel :
la structure d'aéronef (22) est une aile d'aéronef (30) ; et
le système antigivrage (26) est configuré pour diriger l'air de prélèvement le long d'un bord d'attaque (38) de l'aile d'aéronef (30) pour chauffer la surface extérieure (28).

9. Système d'aéronef (20) selon une quelconque revendication précédente, dans lequel :
la structure d'aéronef (22) comprend une nacelle (52) logeant le groupe motopropulseur (48) ; et
une lèvre de prise d'air (108) de la nacelle (52) comporte la surface extérieure (28).

10. Système d'aéronef (20) selon une quelconque revendication précédente, dans lequel :
la structure d'aéronef (22) comprend une nacelle (52) logeant le groupe motopropulseur (48) ; et
le système antigivrage (26) est configuré pour diriger l'air de prélèvement le long d'une lèvre de prise d'entrée (108) de la nacelle (52) pour chauffer la surface extérieure (28).

11. Système d'aéronef (20) selon une quelconque revendication précédente, dans lequel :
le circuit de refroidissement (98) fait circuler du lubrifiant pour le groupe motopropulseur (48).

12. Système d'aéronef (20) selon l'une quelconque des revendications 1 à 10, dans lequel :
le circuit de refroidissement (98) fait circuler du carburant pour le groupe motopropulseur (48).

13. Système d'aéronef (20) selon l'une quelconque des revendications 1 à 10, dans lequel :
le circuit de refroidissement (98) fait circuler un fluide de refroidissement pour le groupe motopropulseur (48).

14. Système d'aéronef (20) selon une quelconque revendication précédente, dans lequel :
le groupe motopropulseur (48) comprend un moteur thermique.

15. Système d'aéronef (20) selon l'une quelconque des revendications 1 à 13, dans lequel :
le groupe motopropulseur (48) comprend un moteur électrique.
